**Europäisches Patentamt**

**European Patent Office**

**Office européen des brevets**

(19)

(11) Numéro de publication: **0 202 153 B1**

(12)

# FASCICULE DE BREVET EUROPEEN

(45) Date de publication du fascicule du brevet:
**26.10.88**

(51) Int. Cl.⁴: **F 01 D 5/14**

(21) Numéro de dépôt: **86400946.9**

(22) Date de dépôt: **30.04.86**

(54) Capotage pour bord d'attaque d'aube de soufflante de turboréacteur.

(30) Priorité: **09.05.85 FR 8506996**

(43) Date de publication de la demande:
**20.11.86 Bulletin 86/47**

(45) Mention de la délivrance du brevet:
**26.10.88 Bulletin 88/43**

(84) Etats contractants désignés:
**DE FR GB**

(56) Documents cités:
**DE - B - 1 161 912**
**GB - A - 360 230**
**GB - A - 789 883**
**US - A - 3 365 126**
**US - A - 3 694 104**
**US - A - 4 111 600**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Gely, Jean-Marie Louis, 154, Boulevard Clémenceau, F-76600 - Le Havre (FR)**
Inventeur: **Goutines, Marius Jean-Marie, 9, avenue Patton, F-77000 - Melun (FR)**
Inventeur: **Meauze, Georges, 25, quai de Grenelle, F-75015 - Paris (FR)**

(74) Mandataire: **Moinat, François, S.N.E.C.M.A. Service des Brevets Boîte Postale 81, F-91003 Evry Cédex (FR)**

## Description

L'invention concerne un capotage pour bord d'attaque d'une aube de soufflante du turboréacteur de type monobloc, ledit capotage étant constitué d'un élément non structural, susceptible d'être fixé sur le bord d'attaque de l'aube.

Pour certains turboréacteurs, les têtes des aubes des soufflantes sont attaquées par un écoulement supersonique, de l'ordre par exemple de Mach 1,5. Or, pour se conformer aux règlements, édictés par les autorités de certification, en matière de résistance à l'impact des oiseaux, on est amené à épaissir le bord d'attaque des aubes au-delà de ce qu'exigéraient les seules considérations de résistance des matériaux et d'optimisation du rendement aérodynamique de l'étage.

Cet épaississement excessif du bord d'attaque crée un système de chocs détachés qui engendrent des zones subsoniques locales étendues et qui diminuent le rendement de l'étage de compression.

Le flux d'air qui pénètre dans le canal «voit» le système d'ondes de choc périodiques, d'où il résulte un effet d'amplification responsable d'une perte de rendement sensible de tout l'étage. Cet effet est encore plus important, dans le cas des soufflantes à talon périphérique, utilisées dans certains moteurs, du fait de l'épaississement supplémentaire nécessité par le raccordement du bord d'attaque au talon.

Les essais et calculs ont montré que les courbes d'évolution des pertes en fonction du nombre de Mach avaient une allure exponentielle, et l'on estime à 20% du total des pertes de l'aubage, la part des pertes qui incombe au seul bord d'attaque du fait de son épaississement. Dans la théorie des écoulements aérodynamiques ces pertes sont dues au détachement des chocs obliques des bords d'attaque.

La solution consisterait à amincir le profil du bord d'attaque, au moins en tête de l'aube, de manière à créer des chocs obliques sans modifier la direction de l'écoulement relatif qui reste supersonique.

On connaît du brevet des EUA n° 1 862 827 des éléments rapportés sur les bords d'attaque d'aubes de turbine à vapeur ayant pour but d'éviter l'érosion due aux chocs des gouttelettes d'eau. Ils présentent, dans le sens de rotation, des saillies aiguës dont les surfaces rencontrent les gouttelettes sous des angles suffisamment faibles pour éviter la formation de trous sous l'action d'impacts répétés.

D'autres éléments, décrits dans le brevet des EUA n° 3 365 126, comportant des pointes sur leurs bords extérieurs, viennent coiffer étroitement le bord d'attaque des aubes du compresseur ou de la soufflante du moteur d'avion. Leur but, identique à celui du brevet précédemment cité, est d'éviter l'érosion causée par les gouttes d'eau, la glace ou la poussière, et ainsi de conserver et même d'améliorer l'efficacité aérodynamique.

L'invention vise à améliorer l'efficacité aérodynamique des aubes à bord d'attaque épais par adjonction sur au moins une partie de tête de l'aube d'un capotage prolongeant le bord d'attaque et formant un nouveau bord de forme et de dimensions compatibles avec une efficacié aérodynamique proche de l'optimum.

Le capotage, selon l'invention, est remarquable en ce qu'il est constitué d'un dièdre formé d'une peau recouvrant au moins une partie de tête de l'aube et fixée sur le bord d'attaque de l'aube sur ses surfaces d'intrados et d'extrados et dont les faces, disposées dans le prolongement des surfaces d'intrados et d'extrados suivant le profil aérodynamique de l'aube, se rejoignent par un arrondi de faible rayon constituant un bord d'attaque de caractéristiques permettant de s'approcher de l'efficacité optimale de la soufflante.

Les explications et figures données ci-après à titre d'exemple permettront de comprendre comment l'invention peut être réalisée.

La figure 1 est une vue latérale d'une aube à talon périphérique équipée d'un dispositif conforme à l'invention.

La figure 2 est une vue latérale d'une aube à nageoires munie d'un dispositif conforme à l'invention.

La figure 3 est une vue en coupe selon lli-III des figures 1 et 2.

La figure 4 est une vue en perspective d'un exemple de capotage.

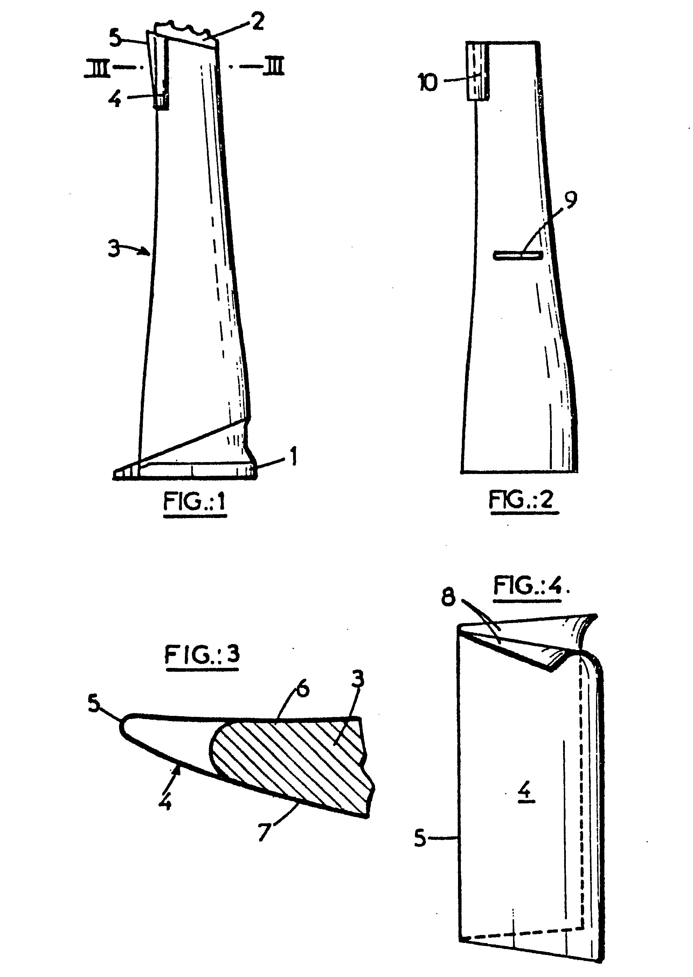

La figure 1 représente une aube de soufflante de turbo-réacteur de type monobloc dont la pale a un profil obtenu par exemple par forgeage, cette aube comportant un pied 1 pour sa fixation sur le rotor de l'étape de compression appelé «soufflante», et un talon périphérique 2 assurant la liaison entre les différentes aubes du rotor ainsi que l'étanchéité avec l'anneau d'étanchéité prévu sur le carter de soufflante.

Cette aube présente à son extrémité et sur son bord d'attaque 3, un capotage 4 conforme à un exemple de réalisation de l'invention.

Ce capotage a pour but d'amincir artificiellement le profil du bord d'attaque afin d'obtenir un meilleur rendement de l'étage et de s'approcher de l'efficacité optimale.

Le capotage 4 se présente sous l'aspect d'un dièdre (figure 3) dont les faces, disposées dans le prolongement des surfaces d'intrados 6 et d'extrados 7 et suivant le profil aérodynamique de l'aube, se rejoignent par un arrondi de faible rayon formant l'arrête 5 de ce dièdre.

La hauteur utile du dièdre, c'est-à-dire la hauteur minimale permettant d'obtenir une amélioration sensible du rendement, est de l'ordre de 15% de la hauteur de l'aube pour l'application décrite. Dans certains types d'aubes de soufflante, 5% de la hauteur de l'aube seraient suffisants.

Selon l'exemple représenté figure 1 les faces du dièdre ont, en projection, la forme approximative d'un trapèze rectangle dont la petite base est dirigée vers le pied d'aube. L'épaisseur du bord d'attaque du dièdre va alors en croissant jusqu'à rattraper l'épaisseur du bord d'attaque de l'aube afin de former une surface continue entre l'aube et le capotage.

Le dièdre est éventuellement muni à sa partie supérieure voisine du talon d'un rebord 8 (figure 4) permettant de raccorder les faces du dièdre au talon.

La figure 2 représente une aube à nageoire médiane 9 munie à son extrémité d'un capotage 10 formé d'un dièdre dont les faces se présentent en projection sous forme de rectangles. L'arête arrondie du dièdre, constituant le bord d'attaque aminci, n'est pas raccordée à sa partie inférieure (vers le pied d'aube) au bord d'attaque de l'aube mais forme un décrochement.

Le capotage selon l'invention est ainsi applicable à des aubes de soufflantes à talons périphériques, d'après l'exemple représenté à la figure 1, à des aubes de soufflante sans talons périphériques, d'après l'exemple de la figure 2, la soufflante étant carénée ou également à des aubes de soufflantes non carénées.

Les capotages sont réalisés par exemple, à partir d'un matériau en feuille, métallique ou non, découpé et plié aux dimensions voulues, fixés de manière connue à l'avant du bord d'attaque sur les surfaces de l'aube. La fixation est obtenue selon le matériau employé par brasage, collage, ou autre moyen connu.

Le matériau en feuille constitue une peau qui peut être renforcée intérieurement par remplissage à l'aide d'une mousse organique, d'une structure nid d'abeilles ou autre.

Les capotages sont réalisés, selon d'autres exemples, par moulage d'un matériau homogène (par exemple une résine synthétique) puis collage sur le bord d'attaque de l'aube ou par molage direct sur le bord d'attaque. Ces deux modes de réalisation peuvent éventuellement comporter une peau formée d'un revêtement métallique ou non.

Les avantages que procure l'utilisation des capotages selon l'invention sont les suivantes:
— augmentation notable du rendement;
— facilité de mise en œuvre sur les aubes existantes;
— faible coût;
— conservation de la résistance de l'aube et de ses fréquences propres et minimisation du balourd, résultant de la perte éventuelle de capotages, par suite du faible poids de ceux-ci;
— caractére amovible du capotage facilitant la maintenance et le développement;
— diminution de l'amplitude du bruit de soufflante associé aux ondes de choc, lors des phases de décollage et de réduction de poussée.

## Revendications

1. Capotage pour bord d'attaque d'une aube de soufflante de turboréacteur de type monobloc, caractérisé en ce qu'il est constitué d'un dièdre (4, 10) formé d'une peau, recouvrant au moins une partie de tête de l'aube et fixée sur le bord d'attaque de l'aube sur ses surfaces d'intrados et d'extrados et dont les faces, disposées dans le prolongement des surfaces d'intrados (6) et d'extrados (7) suivant le profil aérodynamique de l'aube, se rejoignent par un arrondi de faible rayon constituant un bord d'attaque de caractéristiques permettant de s'approcher de l'efficacité optimale de la soufflante.

2. Capotage selon la revendication 1, caractérisé en ce que la hauteur utile du dièdre est d'au moins 5% de la hauteur de l'aube.

3. Capotage selon la revendication 1, caractérisé en ce que la peau est renforcée intérieurement par un matériau homogène.

4. Capotage selon la revendication 1, caractérisé en ce que la peau est renforcée par une structure en nid d'abeilles.

5. Capotage selon la revendication 1, caractérisé en ce que le dièdre est formé par moulage d'un matériau homogène.

6. Capotage selon l'une des revendications précédentes, caractérisé en ce que le dièdre est formé d'un matériau métallique en feuille.

7. Capotage selon l'une des revendications 1 à 6, caractérisé en ce que l'épaisseur du bord d'attaque du dièdre va en croissant vers le pied d'aube jusqu'à rattraper l'épaisseur du bord d'attaque de l'aube.

8. Capotage selon la revendication 7, pour une aube à talon périphérique, caractérisé en ce que le dièdre porte à sa partie supérieure voisine du talon un rebord (8) de raccordement au talon de l'aube.

## Patentansprüche

1. Verkleidung für die Angriffskante einer Verdichterschaufel in einem Monoblock-Turbostrahltriebwerk, dadurch gekennzeichnet, dass sie aus einem Zweiflach (4, 10) bestehet, das aus einer Haut gebildet ist, die zumindest einen Teil des Schaufelkopfes abdeckt und an der Angriffskante der Schaufel auf den Innen- und Aussenwölbungsflächen fixiert ist und deren in der Verlängerung der Innen- und Aussenwölbungsflächen (6, 7) angeordnete, dem aerodynamischen Profil der Schaufel folgende Seiten sich in einer Rundung mit kleinem Radius vereinigen, die eine Angriffskante bildet, deren Eigenschaften eine Annäherung an den optimalen Wirkungsgrad des Verdichters ermöglichen.

2. Verkleidung nach Anspruch 1, dadurch gekennzeichnet, dass die Nutzhöhe des Zweiflachs wenigstens 5% der Schaufelhöhe beträgt.

3. Verkleidung nach Anspruch 1, dadurch gekennzeichnet, dass die Haut innen durch ein homogenes Material verstärkt ist.

4. Verkleidung nach Anspruch 1, dadurch gekennzeichnet, dass die Haut durch eine Wabenstruktur verstärkt ist.

5. Verkleidung nach Anspruch 1, dadurch gekennzeichnet, dass das Zweiflach als Gussteil aus einem homogenen Material hergestellt ist.

6. Verkleidung nach einem der vorhergehenden Ansprüche, dadurch gekennzeichnet, dass das Zweiflach aus einer Metallfolie hergestellt ist.

7. Verkleidung nach einem der Ansprüche 1 bis 6, dadurch gekennzeichnet, dass die Dicke der Angriffskante des Zweiflachs in Richtung auf den Schaufelfuss bis auf die Dicke der Angriffskante der Schaufel anwächst.

8. Verkleidung nach Anspruch 7, für eine Schaufel mit peripherem Absatz, dadurch gekennzeichnet, dass das Zweiflach an seinem oberen, dem Absatz benachbarten Teil einen Umschlag (8) zur Verbindung mit dem Absatz der Schaufel trägt.

## Claims

1. Cowling for leading edge of a monobloc-type turbo jet blower blade, characterized in that it comprises a dihedron (4, 10) formed by a skin covering at least a head part of the blade and fixed to the leading edge of the blade on its intrados and extrados surfaces, and the faces of which, arranged in the extension of the intrados (6) and extrados (7) surfaces along the areodynamic profile of the blade, are linked via a curved piece of short radius constituting a leading edge having features which make it possible to approach optimum efficiency of the blower.

2. Cowling according to Claim 1, characterized in that the useful height of the dihedron is at least 5% of the height of the blade.

3. Cowling according to Claim 1, characterized in that the skin is reinforced internally by a homogeneous material.

4. Cowling according to Claim 1, characterized in that the skin is reinforced by a honeycomb structure.

5. Cowling according to Claim 1, characterized in that the dihedron is formed by moulding of a homogeneous material.

6. Cowling according to one of the preceding claims, characterized in that the dihedron is formed from a metallic material in sheet form.

7. Cowling according to one of Claims 1 to 6, characterized in that the thickness of the leading edge of the dihedron increases towards the foot of the blade until it reaches the thickness of the leading edge of the blade.

8. Cowling according to Claim 7, for a blade having a peripheral beading, characterized in that the dihedron bears in its upper part, in the vicinity of the beading, a rim (8) connecting it to the beading of the blade.

FIG.:1

FIG.:2

FIG.:3

FIG.:4.